# EUROPÄISCHE PATENTSCHRIFT

(11) **EP 4 524 083 B1**
(45) Veröffentlichungstag und Bekanntmachung des Hinweises auf die Patenterteilung: **14.01.2026**
(21) Anmeldenummer: 24198953.2
(22) Anmeldetag: 06.09.2024
(51) Int. Cl.: G06V 20/10, G06T 7/62, B66F 9/075, B66F 9/24, G06T 7/579

(54) **VERFAHREN ZUM BETREIBEN EINES FLURFÖRDERZEUGS IN EINEM LAGER UND FLURFÖRDERZEUG**
METHOD FOR OPERATING AN INDUSTRIAL TRUCK IN A WAREHOUSE AND INDUSTRIAL TRUCK
PROCÉDÉ POUR FAIRE FONCTIONNER UN CHARIOT DE MANUTENTION DANS UN ENTREPÔT ET CHARIOT DE MANUTENTION

(30) Priorität: 18.09.2023 DE 102023125117
(43) Veröffentlichungstag der Anmeldung: 19.03.2025
(73) Patentinhaber: Jungheinrich AG, 22047 Hamburg (DE)
(72) Erfinder: Jörgens, Frauke, 25436 Tornesch (DE); Kopelke, Jan, 22927 Großhansdorf (DE); Altmann, Tony, 24616 Brokstedt (DE); Grabbe, Florian, 22335 Hamburg (DE); Ahrens, Stefan, 25373 Ellerhoop (DE); Quickert, Steffen, 27793 Wildeshausen (DE); Prochnow, Thorge, 22415 Hamburg (DE); Hartwig, Jobst, 25421 Pinneberg (DE)
(74) Vertreter: Hauck Patent- und Rechtsanwälte PartmbB

(56) Entgegenhaltungen:
- DE-A1- 102020 126 401
- DE-A1- 102020 215 149
- US-A1- 2022 363 528

## Beschreibung

Die Erfindung betrifft ein Verfahren zum Betreiben eines Flurförderzeugs in einem Lager und ein Flurförderzeug.

Bei derartigen Verfahren sind unterschiedliche Assistenzsysteme bekannt geworden, die eine Bedienperson unterstützen können. Beispielsweise ist bekannt, die Umgebung eines Flurförderzeugs mit einer 3D-Kamera (zum Beispiel einer *Time-of-Flight-*Kamera) zu erfassen, um ein dreidimensionales Bild der Umgebung zu erhalten, in dem bestimmte Waren oder Lagerplätze identifiziert werden können. Diese Ansätze sind jedoch aufgrund der erforderlichen Hardware sehr teuer und tendenziell fehleranfällig.

Aus der Computerwissenschaft sind unter den Schlagworten *Structure from Motion* (SfM) und *Visual Simultaneous Localization and Mapping* (vSLAM) Verfahren bekannt geworden, mit denen auf Grundlage zweidimensionaler Bilder dreidimensionale Strukturen rekonstruiert werden können.

Aus der Druckschrift DE 10 2020 126 401 A1 ist ein Verfahren bekannt geworden, bei dem mit einer 2D-Kamera Bilder aus zwei unterschiedlichen Kamerapositionen erfasst werden, wobei die von der 2D-Kamera zwischen dem Erfassen der beiden Bilder zurückgelegte Strecke bekannt ist. In einem Überlappungsbereich der beiden Bilder kann unter Berücksichtigung der zurückgelegten Strecke ein Abstandswert eines Punkts von dem Flurförderzeug berechnet werden. Dieser Abstandswert kann eine Bedienperson beim Ein- und Auslagern von Waren unterstützen, insbesondere um die Position der Gabelzinken genau zu steuern, oder um während der Fahrt einen Abstand von einem Regal oder einer Wand einzuhalten.

Dokument DE 10 2020 215149 A1 offenbart ein Verfahren gemäß dem Oberbegriff des unabhängigen Anspruchs 1 und ein Flurförderzeug gemäß dem Oberbegriff des unabhängigen Anspruchs 12.

Davon ausgehend ist es die Aufgabe der Erfindung, ein Verfahren zum Betreiben eines Flurförderzeugs sowie ein Flurförderzeug zur Verfügung zu stellen, das eine Bedienperson beim Ein- und Auslagern von Waren noch besser unterstützt.

Diese Aufgabe wird gelöst durch das Verfahren zum Betreiben eines Flurförderzeugs mit den Merkmalen des Anspruchs 1. Vorteilhafte Ausgestaltungen sind in den sich anschließenden Unteransprüchen angegeben.

Das Verfahren dient zum Betreiben eines Flurförderzeugs, das eine Kamera aufweist, und umfasst die folgenden Schritte:
- Erfassen einer Folge zweidimensionaler Bilder mit der Kamera,
- Berechnen einer dreidimensionalen Punktwolke auf Grundlage der Folge zweidimensionaler Bilder,
- Berechnen eines Skalierungsfaktors für die Punktwolke auf Grundlage eines ersten Punkts der Punktwolke und eines zweiten Punkts der Punktwolke, die jeweils eine definierte Position im Raum repräsentieren,
- Bereitstellen einer skalierten, dreidimensionalen Punktwolke, die eine Umgebung des Flurförderzeugs in dem Lager repräsentiert,
- Identifizieren eines Bereichs in der skalierten, dreidimensionalen Punktwolke, der einen freien Lagerplatz oder eine aufzunehmende Ware repräsentiert, und
- Berechnen einer Abmessung des freien Lagerplatzes bzw. der aufzunehmenden Ware anhand der skalierten, dreidimensionalen Punktwolke.

Das Flurförderzeug kann ein beliebiges Flurförderzeug sein, das zum Ein- und Auslagern von Waren in einem Lager eingesetzt wird, beispielsweise ein Gabelstapler, ein Schubmaststapler, ein Komissionierer oder ein Niederhubfahrzeug. Insbesondere handelt es sich um ein Flurförderzeug, das von einer mitfahrenden Bedienperson gesteuert wird. Das Verfahren ist jedoch auch für ein autonom fahrendes Flurförderzeug geeignet.

Das Flurförderzeug weist eine Kamera auf, die an dem Flurförderzeug angeordnet ist. Die Kamera kann relativ zu dem Flurförderzeug fest angeordnet sein, etwa am Dach einer Fahrerkabine. Dies ist die bevorzugte Lösung, weil sich die Auswertung der erfassten Bilder durch die dann stets gleiche, bekannte Höhe der Kamera vereinfacht. Alternativ kann die Kamera an einem beweglichen Teil des Flurförderzeugs angeordnet sein, zum Beispiel an einem Lasttragmittel. Bevorzugt ist die Kamera so angeordnet, dass sie einen Bereich erfasst, in dem typische Ein- und Auslagerungsvorgänge stattfinden, zum Beispiel einen Bereich mit und/oder vor dem Lasttragmittel und/oder einen Bereich in der Nähe des Flurförderzeugs, in dem sich im Betrieb viele Lagerplätze befinden, zum Beispiel einen bestimmten Höhenbereich, in dem sich die Regalböden des Lagers oder sonstige Lagerflächen befinden.

Die Kamera liefert eine Folge zweidimensionaler Bilder, insbesondere in einer vorgegebenen zeitlichen Abfolge, zum Beispiel in einem Videostrom mit einer vorgegebenen Bildrate. Es kann sich bei der Kamera insbesondere um eine digitale Videokamera handeln. Das Erfassen der Folge zweidimensionaler Bilder geschieht unter anderem, während sich das Flurförderzeug in dem Lager bewegt, sodass sich die Kamera beim Erfassen der einzelnen Bilder der Folge in unterschiedlichen Positionen befinden kann. Die Umgebung wird daher aus unterschiedlichen Blickwinkeln und Positionen erfasst.

Darum kann auf Grundlage der zweidimensionalen Bilder der Folge eine Punktwolke berechnet werden. Die Punktwolke enthält zu jedem Punkt der Punktwolke räumliche Koordinaten, die eine Position im Raum angeben, an der der zugehörige Punkt angeordnet ist. In diese Sinne repräsentiert jeder Punkt der Punktwolke eine Position im Raum. Allerdings können auf Grundlage der zweidimensionalen Bilder zunächst nur relative Positionen im Raum berechnet werden, keine absoluten. Die Punktwolke ist daher unskaliert und gibt nur die Positionen der Punkte relativ zueinander an. Absolute Koordinaten und absolute Abstände (zum Beispiel in Metern) zwischen zwei Positionen im Raum, die jeweils durch einen Punkt der Punktwolke repräsentiert werden, können nicht angegeben werden.

Hierfür wird in einem weiteren Verfahrensschritt ein Skalierungsfaktor berechnet. Dies gelingt auf Grundlage zweier Punkte der Punktwolke, die jeweils eine definierte Position im Raum repräsentieren. Damit ist gemeint, dass insbesondere ein Abstand zwischen den Positionen im Raum bekannt ist. Dieser kann zum Abstand der beiden Punkte in der Punktwolke in Beziehung gesetzt werden, um den Skalierungsfaktor zu berechnen.

Bei der Erfindung wird für die weiteren Verfahrensschritte eine skalierte, dreidimensionale Punktwolke bereitgestellt, die eine Umgebung des Flurförderzeugs in dem Lager repräsentiert. Hierfür können im einfachsten Fall die unskalierte Punktewolke und der Skalierungsfaktor bereitgestellt werden. Es ist jedoch auch möglich, anhand der unskalierten Punktwolke und des Skalierungsfaktors eine neue, skalierte Punktwolke zu berechnen und für die weitere Verwendung zu speichern.

Anschließend kann in der skalierten, dreidimensionalen Punktwolke ein Bereich identifiziert werden, der einen freien Lagerplatz oder eine aufzunehmende Ware repräsentiert. Hierfür wird in der Punktwolke mit einem geeigneten Algorithmus ein Volumen ermittelt, das einer Erwartung entspricht, die an einen freien Lagerplatz bzw. an eine aufzunehmende Ware gestellt wird. Beispielsweise kann ein insbesondere quaderförmiges Volumen, das keine Punkte enthält und vorgegebene Abmessungen aufweist, in der skalierten Punktwolke als freier Lagerplatz identifiziert werden. Im Falle einer aufzunehmenden Ware kann zum Beispiel eine Teilmenge an Punkten der Punktwolke, die sich oberhalb einer (in der Punktwolke erkannten) Palette befindet, die eine bestimmte Geometrie aufweist und/oder die sich an einem bestimmten Ort relativ zu dem Flurförderzeug (etwa auf oder vor dem Lasttragmittel) befindet, als aufzunehmende Ware identifiziert werden.

Nach dem Identifizieren wird eine Abmessung des freien Lagerplatzes bzw. der aufzunehmenden Ware berechnet. Dies ist anhand der skalierten, dreidimensionalen Punktwolke einfach möglich, weil die zu berücksichtigenden Punkte der Punktwolke im vorherigen Schritt identifiziert wurden und weil dank der Skalierung die realen Positionen der von diesen Punkten repräsentierten Objekte bekannt sind. Die berechnete Abmessung kann eine Breite, eine Höhe und/oder eine Länge des freien Lagerplatzes bzw. der aufzunehmenden Ware sein. Insbesondere kann eine dreidimensionale Abmessung berechnet werden, in Form von Angaben zur Breite, Höhe und Länge.

Die berechnete Abmessung kann im Betrieb des Flurförderzeugs auf unterschiedliche Art und Weise genutzt werden. Beispielsweise kann das Flurförderzug eine Anzeige aufweisen, auf der die Abmessung einer Bedienperson angezeigt wird. Die Bedienperson kann auf dieser Grundlage zum Beispiel besser entscheiden, ob ein bestimmter Lagerplatz für eine bestimmte Ware geeignet ist. Dies gilt insbesondere für schlecht einsehbare Lagerplätze und Waren in großer Höhe.

Ein besonderer Vorteil der Erfindung ist, dass die Abmessung in vielen Fällen nutzbar gemacht werden kann, ohne spezielle oder besonders kostspielige Hardware einzusetzen. Viele Flurförderzeuge sind bereits mit einer Kamera ausgestattet, zum Beispiel für eine unmittelbare, visuelle Unterstützung der Bedienperson durch Anzeigen eines Bereichs vor dem Flurförderzeug/vor dem Lasttragmittel auf einem Bildschirm in der Fahrerkabine. Eine solche Kamera kann in der Regel für das erfindungsgemäße Verfahren genutzt werden. Die übrigen Schritte des Verfahrens können im Wesentlichen mittels Software realisiert werden, die auf einem Bordcomputer oder einem sonstigen Rechner des Flurförderzeugs ausgeführt werden kann.

Zudem können mittels der beschriebenen Auswertung der zweidimensionalen Bilder besonders robuste Daten über die Umgebung erhalten werden. Insbesondere kann die Punktwolke und/oder der Skalierungsfaktor im Betrieb des Flurförderzeugs fortlaufend oder schrittweise durch Auswertung immer weiterer Folgen von Bildern verbessert und aktualisiert werden.

In einer Ausgestaltung wird beim Berechnen der Punktwolke ein Algorithmus angewendet, der simultan Positionen der Kamera und Punkte der Umgebung ermittelt. Dieser Ansatz wird als *Simultaneous Localization and Mapping* (SLAM) bezeichnet. Er beruht auf einer simultanen Optimierung zahlreicher Parameter, die einerseits die unterschiedlichen Kamerapositionen, anderseits die in der Umgebung erfassten Punkte beschreiben. Die Optimierung wird so durchgeführt, dass die Abweichungen zwischen dem durch die Parameter beschriebenen Modell und den erfassten Bildern minimiert wird. Ergebnis ist die unskalierte Punktwolke.

In einer Ausgestaltung wird beim Berechnen des Skalierungsfaktors ein Objekt in der Punktwolke erkannt, das an einer bekannten Position im Raum angeordnet ist, und der erste Punkt repräsentiert dieses Objekt. Zum Erkennen des Objekts in der Punktwolke kann auf Methoden der Mustererkennung zurückgegriffen werden. Als einer der beiden Referenzpunkte für die Berechnung des Skalierungsfaktors kann insbesondere ein fest im Lager angeordnetes Objekt gewählt werden, beispielsweise eine Lichtquelle, ein Träger, ein Fenster, ein Dachbalken oder dergleichen oder eine gezielt angebrachte Markierung zum Beispiel an einer Wand des Lagers.

In einer Ausgestaltung ist der erste Punkt ein markanter Punkt des Objekts, beispielsweise ein Eckpunkt, eine Kante oder ein Mittelpunkt. Dies ist eine gute Lösung insbesondere bei Objekten mit bekannter Geometrie wie beispielsweise einem standardisierten Ladungsträger wie einer Euro-Palette.

In einer Ausgestaltung ist das Objekt eine Bodenebene und der erste Punkt gibt eine Höhe der Bodenebene an. Die Wahl einer Bodenebene als Referenzpunkt bietet mehrere Vorteile. Zum einen kann die Bodenebene aufgrund ihrer großen Fläche und weil sie in einem typischen Lager in der Regel völlig eben ist, besonders einfach erkannt werden. Zum anderen bietet die Höhe der Bodenebene einen besonders universell nutzbaren Referenzpunkt, der für alle Bereiche des Lagers von Bedeutung und in den meisten der zweidimensionalen Bilder sichtbar ist.

In einer Ausgestaltung repräsentiert der zweite Punkt dasselbe Objekt wie der erste Punkt und das Objekt weist eine bekannte Größe auf, die dem Abstand zwischen den beiden von den Punkten repräsentierten Positionen im Raum entspricht. Beispielsweise können die beiden Punkte zwei voneinander entfernte Enden eines Regals bekannter Länge und/oder Höhe repräsentieren.

In einer Ausgestaltung repräsentiert der zweite Punkt eine Position der Kamera. Ist die Position der Kamera zu dem betrachteten Zeitpunkt bekannt, kann sie als zweiter Referenzpunkt genutzt werden. Dies gilt insbesondere für die Höhe der Kamera, die bei fester Anordnung der Kamera am Flurförderzeug immer konstant ist. Wird als erster Punkt ein Punkt der Bodenebene gewählt, ist der Abstand der beiden Positionen im Raum - insbesondere in senkrechter Richtung - unmittelbar bekannt und für die Berechnung des Skalierungsfaktor gut geeignet.

In einer Ausgestaltung wird beim Berechnen des Skalierungsfaktors eine Bewegung des Flurförderzeugs gemessen und daraus wird ein Abstand zwischen den beiden Positionen im Raum, die von dem ersten Punkt und von dem zweiten Punkt repräsentiert werden, ermittelt. Das Messen der Bewegung kann den gesamten Bewegungsablauf verfolgen, es ist jedoch auch ausreichend, den Anfangs- und Endpunkt der Bewegung zu erfassen. Zum Messen der Bewegung können unterschiedliche Techniken eingesetzt werden, beispielsweise ein Drehgeber, der die Drehstellung oder Drehbewegung eines Rads des Flurförderzeugs erfasst, ein Beschleunigungssensor oder ein Gyroskop am Flurförderzeug. Alternativ kann ein optisches oder funkbasiertes Ortungssystem des Flurförderzeugs die Bewegung messen bzw. den Anfangs- und Endpunkt der Bewegung feststellen. Die beiden Positionen im Raum, die zum Berechnen des Skalierungsfaktors herangezogen werden, können insbesondere die beiden Positionen der Kamera am Anfang und Ende der betrachteten Bewegung sein.

In einer Ausgestaltung werden die ermittelten Informationen über den freien Lagerplatz bzw. die aufzunehmende Ware an ein Logistiksystem übermittelt und die in dem Logistiksystem gespeicherten Daten werden aktualisiert. Die ermittelten Informationen schließen insbesondere die berechnete Abmessung ein, können jedoch auch umfassen, dass an einer bestimmten Position ein freier Lagerplatz bzw. eine bestimmte Ware verfügbar ist. Durch die Synchronisierung mit dem Logistiksystem können die mit dem Flurförderzeug erhobenen Daten auf vielfältige Weise genutzt werden.

In einer Ausgestaltung wird unter Verwendung der ermittelten Abmessung festgestellt, ob der identifizierte Lagerplatz zur Einlagerung einer bestimmten Ware bzw. ob die identifizierte Ware zur Einlagerung an einem bestimmten Lagerplatz geeignet ist. Diese Information kann zum Beispiel an ein Logistiksystem übermittelt und/oder unmittelbar einer Bedienperson des Flurförderzeugs angezeigt werden, zum Beispiel auf einer Anzeige in der Fahrerkabine, aber auch durch ein akustisches Signal oder eine Sprachausgabe.

In einer Ausgestaltung wird das Identifizieren des Bereichs und das Berechnen der Abmessung auf Anforderung einer Bedienperson des Flurförderzeugs ausgeführt, insbesondere in einem Bereich der Punktwolke, der einen aktuell vor dem Flurförderzeug befindlichen Bereich des Lagers repräsentiert. Die Anforderung der Bedienperson kann zum Beispiel durch Drücken einer Taste, Betätigen eines Touchpads oder mittels Spracheingabe erfolgen. Dies erlaubt die gezielte Auswertung eines bestimmten Bereichs der skalierten Punktwolke zu einem von der Bedienperson bestimmten Zeitpunkt.

Die oben angegebene Aufgabe wird ebenfalls gelöst durch das Flurförderzeug mit den Merkmalen des Anspruchs 12.

Das Flurförderzeug hat ein System zur Berechnung einer Abmessung eines freien Lagerplatzes oder einer aufzunehmenden Ware, wobei das System folgendes aufweist:
- eine elektronische Steuerung,
- eine an dem Flurförderzeug angeordnete Kamera, die mit der elektronischen Steuerung verbunden und dazu ausgebildet ist, eine Folge zweidimensionaler Bilder zu erfassen, wobei die Steuerung dazu eingerichtet ist,
- auf Grundlage der Folge zweidimensionaler Bilder eine dreidimensionale Punktwolke zu berechnen,
- auf Grundlage eines ersten Punkts der Punktwolke und eines zweiten Punkts der Punktwolke, die jeweils eine definierte Position im Raum repräsentieren, einen Skalierungsfaktor für die Punktwolke zu berechnen,
- eine skalierte, dreidimensionale Punktwolke bereitzustellen, die eine Umgebung des Flurförderzeugs in einem Lager repräsentiert,
- einen Bereich in der skalierten, dreidimensionalen Punktwolke zu identifizieren, der einen freien Lagerplatz oder eine aufzunehmende Ware repräsentiert, und
- eine Abmessung des freien Lagerplatzes bzw. der aufzunehmenden Ware anhand der skalierten, dreidimensionalen Punktwolke zu berechnen.

Zur Erläuterung des Flurförderzeugs wird auf die obigen Erläuterungen des Verfahrens verwiesen, die entsprechend gelten. Das Flurförderzeug kann insbesondere zur Ausführung des Verfahrens nach einem der Verfahrensansprüche eingerichtet sein. Damit ist insbesondere gemeint, dass die elektronische Steuerung dazu eingerichtet ist, die jeweiligen Verfahrensschritte auszuführen, in einigen Fällen in Kombination mit einem Logistiksystem.

Nachfolgend wird die Erfindung anhand von Figuren in dargestellten Ausführungsbeispielen näher erläutert. Es zeigen:
- Fig. 1: ein Diagramm zur Illustration der Schritte des Verfahrens,
- Fig. 2: eine schematische Darstellung zur Veranschaulichung einer ersten Variante des Verfahrens, und
- Fig. 3: eine schematische Darstellung zur Veranschaulichung einer zweiten Variante des Verfahrens.

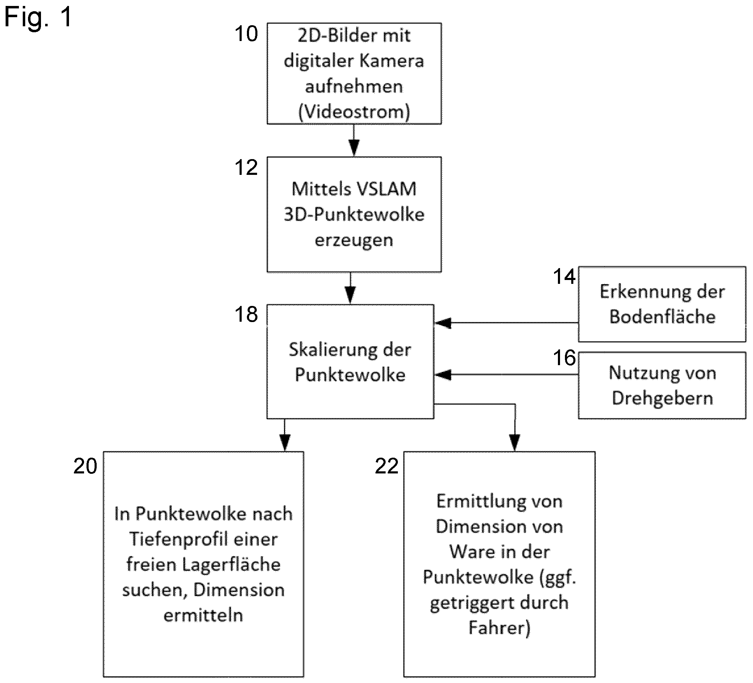

Das in Fig. 1 veranschaulichte Verfahren beginnt im Schritt 10 ("2D-Bilder mit digitaler Kamera aufnehmen (Videostrom)") mit dem Erfassen einer Folge zweidimensionaler Bilder mit einer Kamera, die am Flurförderzeug angeordnet ist. Die erfassten Bilder werden einer in Fig. 1 nicht gezeigten, elektronischen Steuerung, die insbesondere an Bord des Flurförderzeugs angeordnet ist, zur Verfügung gestellt und von dieser ausgewertet.

In einem ersten Auswertungsschritt 12 ("Mittels vSLAM 3D-Punktwolke erzeugen") wird in einem Optimierungsverfahren simultan eine Lokalisierung der Kamera und eine Kartierung der in den Bildern erkannten Punkte/Objekte vorgenommen. Ergebnis ist eine unskalierte Punktwolke.

Im Schritt 14 ("Erkennung der Bodenfläche") wird in der unskalierten Punktwolke mit Methoden der Mustererkennung eine Bodenfläche des Lagers erkannt. Diese, insbesondere eine Höhenkoordinate der Bodenfläche, bildet einen ersten Referenzpunkt.

Im Schritt 16 ("Nutzung von Drehgebern"), der bereits während des Erfassens der Folge zweidimensionaler Bilder im Schritt 10 parallel ausgeführt wird, wird im Beispiel anhand von Drehgebern eine Bewegung des Flurförderzeugs und zugleich eine Bewegung der Kamera vermessen. Dadurch kann insbesondere ein Abstand zwischen zwei Kamerapositionen berechnet und mit zugehörigen Punkten der Punktwolke verglichen werden.

In einem weiteren Schritt 18 ("Skalierung der Punktwolke") wird ein Skalierungsfaktor für die Punktwolke berechnet. Dies kann auf unterschiedliche Art und Weise geschehen, Fig. 1 berücksichtigt insbesondere zwei Varianten. Wird die im Schritt 14 erkannte Bodenfläche als ein Referenzpunkt genutzt, bietet sich die Verwendung einer Höhenkoordinate der Kameraposition, die bekannt ist, als zweiter Referenzpunkt an, um den Skalierungsfaktor zu berechnen. Werden stattdessen oder zusätzlich Drehgeber im Schritt 16 verwendet, kann die Skalierung durch Vergleichen des Abstands zwischen den beiden Kamerapositionen und des Abstands zwischen zugehörigen Punkten der Punktwolke erfolgen.

Im Schritt 20 ("In Punktwolke nach Tiefenprofil einer freien Lagerfläche suchen, Dimension ermitteln") wird ein Bereich der skalierten, dreidimensionalen Punktwolke identifiziert, der einen freien Lagerplatz repräsentiert. Anhand der skalierten, dreidimensionalen Punktwolke wird eine Abmessung dieses freien Lagerplatzes berechnet.

Im Schritt 22 ("Ermittlung von Dimension von Ware in der Punktwolke (ggf. getriggert durch Fahrer)") wird ein Bereich in der skalierten, dreidimensionalen Punktwolke identifiziert, der eine aufzunehmende Ware repräsentiert. Eine Abmessung der aufzunehmenden Ware wird anhand der skalierten, dreidimensionalen Punktwolke berechnet.

In beiden Fällen (freier Lagerplatz/aufzunehmende Ware) kann die ermittelte Abmessung auf vielfältige Art und Weise genutzt werden, beispielsweise durch Anzeigen der Abmessung auf einem Bildschirm des Flurförderzeug zum Ablesen durch eine Bedienperson.

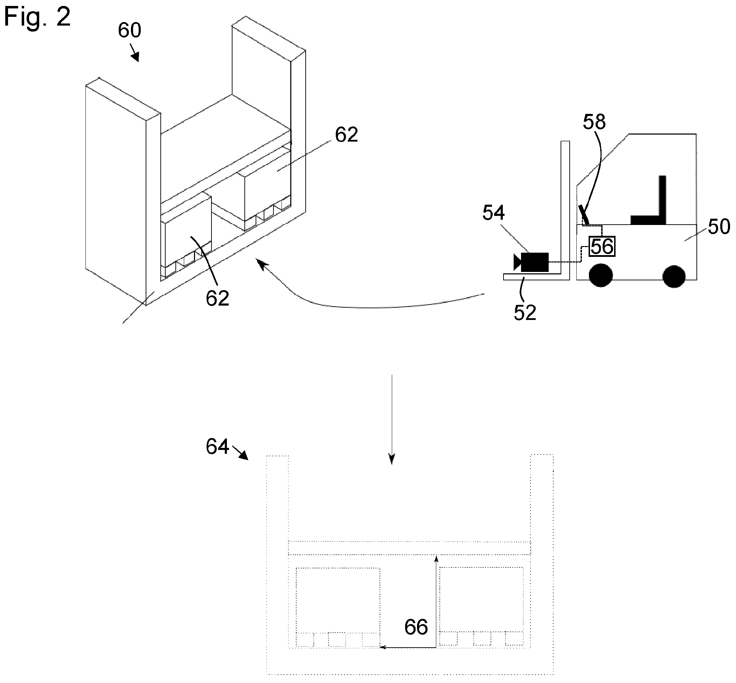

Figur 2 zeigt oben rechts ein Flurförderzeug 50, das ein Lasttreibmittel 52 und eine daran angeordnete Kamera 54 aufweist. Die Kamera 54 ist mit einer elektronischen Steuerung 56 verbunden. Ebenfalls mit elektronischen Steuerung 56 verbunden ist eine Anzeige 58.

Oben links in Fig. 2 ist perspektivisch ein Regal 60 gezeigt, das zwei vertikale Regalseiten und zwei horizontale Regalböden aufweist. Auf dem unteren Regalboden sind zwei Waren 62 gezeigt, zwischen denen sich ein Freiraum befindet. Das Regal 60 mit den darauf angeordneten Waren 62 bildet einen Teil der räumlichen Umgebung des Flurförderzeugs 50, der während der Fahrt des Flurförderzeugs 50 mit der Kamera 54 erfasst wird.

Im unteren Teil der Fig. 2 ist eine skalierte, dreidimensionale Punktwolke 64 veranschaulicht, in der das Regal 60 und die Waren 62 durch zahlreiche Punkte repräsentiert sind. Durch Auswertung der skalierten, dreidimensionalen Punktwolke durch die elektronische Steuerung 56 wurde der Freiraum zwischen den beiden Waren 62 als freier Lagerplatz 66 identifiziert und die Abmessung des freien Lagerplatzes 66 wurde berechnet.

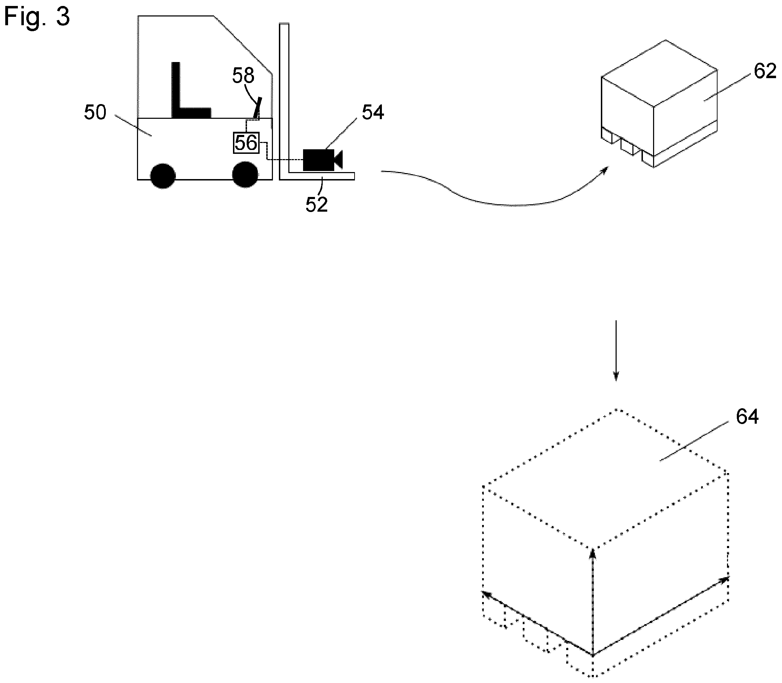

Figur 3 zeigt oben links das Flurförderzeug 50 aus Fig. 2. Die Kamera 54 erfasst diesmal eine auf einem Hallenboden stehende Ware 62, die oben rechts in einer perspektivischen Ansicht dargestellt ist, aus unterschiedlichen Blickwinkeln.

Ergebnis der Auswertungsschritte der Folge zweidimensionaler Bilder ist die in Fig. 3 unten rechts dargestellte, skalierte Punktwolke 64, deren Punkte die Ware 62 repräsentieren. Die berechneten Abmessungen der Ware 62 sind durch das Koordinatensystem veranschaulicht und umfassen die Abmessung der Ware 62 in Breiten-, Höhen- und Tiefenrichtung.

### Liste der Bezugszeichen

- 10-22: Verfahrensschritte
- 50: Flurförderzeug
- 52: Lasttragmittel
- 54: Kamera
- 56: elektronische Steuerung
- 58: Anzeige
- 60: Regal
- 62: Ware
- 64: Punktwolke
- 66: Lagerplatz

## Patentansprüche

1. Verfahren zum Betreiben eines Flurförderzeugs (50) in einem Lager, wobei das Flurförderzeug (50) eine Kamera (54) aufweist und das Verfahren die folgenden Schritte umfasst:
• Erfassen einer Folge zweidimensionaler Bilder mit der Kamera (54),
• Berechnen einer dreidimensionalen Punktwolke auf Grundlage der Folge zweidimensionaler Bilder,
**dadurch gekennzeichnet, dass** es ferner die Schritte umfasst:
• Berechnen eines Skalierungsfaktors für die Punktwolke auf Grundlage eines ersten Punkts der Punktwolke und eines zweiten Punkts der Punktwolke, die jeweils eine definierte Position im Raum repräsentieren,
• Bereitstellen einer skalierten, dreidimensionalen Punktwolke (64), die eine Umgebung des Flurförderzeugs (50) in dem Lager repräsentiert,
• Identifizieren eines Bereichs in der skalierten, dreidimensionalen Punktwolke (64), der einen freien Lagerplatz (66) oder eine aufzunehmende Ware (62) repräsentiert, und
• Berechnen einer Abmessung des freien Lagerplatzes (66) bzw. der aufzunehmenden Ware (62) anhand der skalierten, dreidimensionalen Punktwolke (64).

2. Verfahren nach Anspruch 1, wobei beim Berechnen der Punktwolke ein Algorithmus angewendet wird, der simultan Positionen der Kamera (54) und Punkte der Umgebung ermittelt.

3. Verfahren nach Anspruch 1 oder 2, wobei beim Berechnen des Skalierungsfaktors ein Objekt in der Punktwolke erkannt wird, das an einer bekannten Position im Raum angeordnet ist, und der erste Punkt dieses Objekt repräsentiert.

4. Verfahren nach einem der Ansprüche 1 bis 3, wobei der erste Punkt ein markanter Punkt des Objekts ist, beispielsweise ein Eckpunkt, eine Kante oder ein Mittelpunkt.

5. Verfahren nach Anspruch 4, wobei das Objekt eine Bodenebene ist und der erste Punkt eine Höhe der Bodenebene angibt.

6. Verfahren nach Anspruch 5, wobei der zweite Punkt dasselbe Objekt repräsentiert wie der erste Punkt und das Objekt eine bekannte Größe aufweist, die dem Abstand zwischen den beiden von den Punkten repräsentierten Positionen im Raum entspricht.

7. Verfahren nach einem der Ansprüche 1 bis 6, wobei der zweite Punkt eine Position der Kamera (54) repräsentiert.

8. Verfahren nach einem der Ansprüche 1 bis 7, wobei beim Berechnen des Skalierungsfaktors eine Bewegung des Flurförderzeugs (50) gemessen und daraus ein Abstand zwischen den beiden Positionen im Raum, die von dem ersten Punkt und von dem zweiten Punkt repräsentiert werden, ermittelt wird.

9. Verfahren nach einem der Ansprüche 1 bis 8, wobei die ermittelten Informationen über den freien Lagerplatz (66) bzw. die aufzunehmende Ware (62) an ein Logistiksystem übermittelt und die in dem Logistiksystem gespeicherten Daten aktualisiert werden.

10. Verfahren nach einem der Ansprüche 1 bis 9, wobei unter Verwendung der ermittelten Abmessung festgestellt wird, ob der identifizierte Lagerplatz (66) zur Einlagerung einer bestimmten Ware (62) geeignet ist bzw. ob die identifizierte Ware (62) zur Einlagerung an einem bestimmten Lagerplatz (66) geeignet ist.

11. Verfahren nach einem der Ansprüche 1 bis 10, wobei das Identifizieren des Bereichs und das Berechnen der Abmessung auf Anforderung einer Bedienperson des Flurförderzeugs (50) ausgeführt wird, insbesondere in einem Bereich der Punktwolke (64), der einen aktuell vor dem Flurförderzeug (50) befindlichen Bereich des Lagers repräsentiert.

12. Flurförderzeug (50) mit einem System zur Berechnung einer Abmessung eines freien Lagerplatzes (66) oder einer aufzunehmenden Ware (62), wobei das System folgendes aufweist:
• eine elektronische Steuerung (56),
• eine an dem Flurförderzeug (50) angeordnete Kamera (54), die mit der elektronischen Steuerung (56) verbunden und dazu ausgebildet ist, eine Folge zweidimensionaler Bilder zu erfassen,
**dadurch gekennzeichnet, dass** die Steuerung (56) dazu eingerichtet ist,
• auf Grundlage der Folge zweidimensionaler Bilder eine dreidimensionale Punktwolke zu berechnen,
• auf Grundlage eines ersten Punkts der Punktwolke und eines zweiten Punkts der Punktwolke, die jeweils eine definierte Position im Raum repräsentieren, einen Skalierungsfaktor für die Punktwolke zu berechnen,
• eine skalierte, dreidimensionale Punktwolke (64) bereitzustellen, die eine Umgebung des Flurförderzeugs (50) in einem Lager repräsentiert,
• einen Bereich in der skalierten, dreidimensionalen Punktwolke (64) zu identifizieren, der einen freien Lagerplatz (66) oder eine aufzunehmende Ware (62) repräsentiert, und
• eine Abmessung des freien Lagerplatzes (66) bzw. der aufzunehmenden Ware (62) anhand der skalierten, dreidimensionalen Punktwolke (64) zu berechnen.

## Claims

1. A method for operating an industrial truck (50) in a warehouse, wherein the industrial truck (50) has a camera (54) and the method comprises the following steps:
• recording a sequence of two-dimensional images with the camera (54),
• calculating a three-dimensional point cloud on the basis of the sequence of two-dimensional images,
**characterized in that** it further comprises the steps of:
• calculating a scaling factor for the point cloud on the basis of a first point of the point cloud and a second point of the point cloud, which each represent a defined position in space,
• providing a scaled, three-dimensional point cloud (64) which represents surroundings of the industrial truck (50) in the warehouse,
• identifying a region in the scaled, three-dimensional point cloud (64) which represents a free storage space (66) or a good (62) to be picked up, and
• calculating a dimension of the free storage space (66) or else of the good (62) to be picked up based on the scaled, three-dimensional point cloud (64).

2. The method according to claim 1, wherein an algorithm that simultaneously determines positions of the camera (54) and points in the surroundings is applied when calculating the point cloud.

3. The method according to claim 1 or 2, wherein an object that is arranged at a known position in space is recognized in the point cloud when the scaling factor is calculated, and the first point represents this object.

4. The method according to any one of claims 1 to 3, wherein the first point is a distinctive point of the object, for example a corner point, an edge, or a center point.

5. The method according to claim 4, wherein the object is a floor level and the first point indicates a height of the floor level.

6. The method according to claim 5, wherein the second point represents the same object as the first point and the object has a known size that corresponds to the distance between the two positions in space represented by the points.

7. The method according to any one of claims 1 to 6, wherein the second point represents a position of the camera (54).

8. The method according to any one of claims 1 to 7, wherein a movement of the industrial truck (50) is measured and a distance between the two positions in space represented by the first point and by the second point is determined from said movement when the scaling factor is calculated.

9. The method according to any one of claims 1 to 8, wherein the determined information about the free storage space (66) or else the good (62) to be picked up is transmitted to a logistics system and the data stored in the logistics system are updated.

10. The method according to any one of claims 1 to 9, wherein it is established using the determined dimension as to whether the identified storage space (66) is suitable for storing a particular good (62) or else whether the identified good (62) is suitable for being stored at a particular storage space (66).

11. The method according to any one of claims 1 to 10, wherein the identification of the region and the calculation of the dimension is carried out at the request of an operator of the industrial truck (50), in particular in a region of the point cloud (64) which represents a region of the warehouse currently located in front of the industrial truck (50).

12. An industrial truck (50) having a system for calculating a dimension of a free storage space (66) or of a good (62) to be picked up, wherein the system has the following:
• an electronic controller (56),
• a camera (54) that is arranged on the industrial truck (50) and is connected to the electronic controller (56) and is designed to record a sequence of two-dimensional images,
**characterized in that** the controller (56) is configured to
• calculate a three-dimensional point cloud on the basis of the sequence of two-dimensional images,
• calculate a scaling factor for the point cloud on the basis of a first point of the point cloud and a second point of the point cloud, which each represent a defined position in space,
• provide a scaled, three-dimensional point cloud (64) which represents surroundings of the industrial truck (50) in a warehouse,
• identify a region in the scaled, three-dimensional point cloud (64) which represents a free storage space (66) or a good (62) to be picked up, and
• calculate a dimension of the free storage space (66) or else of the good (62) to be picked up based on the scaled, three-dimensional point cloud (64).

## Revendications

1. Procédé destiné à faire fonctionner un chariot de manutention (50) dans un entrepôt, dans lequel le chariot de manutention (50) présente une caméra (54) et le procédé comporte les étapes suivantes :
• détection d'une suite d'images bidimensionnelles à l'aide de la caméra (54),
• calcul d'un nuage de points tridimensionnel sur la base de la suite d'images bidimensionnelles,
**caractérisé en ce que** celui-ci comporte en outre les étapes suivantes :
• calcul d'un facteur de mise à l'échelle pour le nuage de points sur la base d'un premier point du nuage de points et d'un deuxième point du nuage de points, lesquels représentent respectivement une position définie dans l'espace,
• mise à disposition d'un nuage de points tridimensionnel mis à l'échelle (64), lequel représente un environnement du chariot de manutention (50) dans l'entrepôt,
• identification d'une zone dans le nuage de points tridimensionnel mis à l'échelle (64), laquelle représente un emplacement de stockage libre (66) ou une marchandise à recevoir (62), et
• calcul d'une dimension de l'emplacement de stockage libre (66) ou de la marchandise à recevoir (62) à l'aide du nuage de points tridimensionnel mis à l'échelle (64).

2. Procédé selon la revendication 1, dans lequel, lors du calcul du nuage de points, un algorithme déterminant simultanément des positions de la caméra (54) et des points de l'environnement est utilisé.

3. Procédé selon la revendication 1 ou 2, dans lequel, lors du calcul du facteur de mise à l'échelle, un objet disposé à une position connue dans l'espace est détecté dans le nuage de points et le premier point représente cet objet.

4. Procédé selon l'une des revendications 1 à 3, dans lequel le premier point est un point marquant de l'objet, par exemple un sommet, un bord ou un centre.

5. Procédé selon la revendication 4, dans lequel l'objet est un niveau de sol et le premier point indique une hauteur du niveau de sol.

6. Procédé selon la revendication 5, dans lequel le deuxième point représente le même objet que le premier point et l'objet présente une taille connue, laquelle correspond à la distance entre les deux positions représentées par les points dans l'espace.

7. Procédé selon l'une des revendications 1 à 6, dans lequel le deuxième point représente une position de la caméra (54).

8. Procédé selon l'une des revendications 1 à 7, dans lequel, lors du calcul du facteur de mise à l'échelle, un déplacement du chariot de manutention (50) est mesuré et une distance entre les deux positions dans l'espace, lesquelles sont représentées par le premier point et par le deuxième point, est déterminée à partir de celui-ci.

9. Procédé selon l'une des revendications 1 à 8, dans lequel les informations déterminées concernant l'emplacement de stockage libre (66) ou la marchandise à recevoir (62) sont transmises à un système logistique et les données enregistrées dans le système logistique sont mises à jour.

10. Procédé selon l'une des revendications 1 à 9, dans lequel il est constaté, à l'aide de la dimension détectée, si l'emplacement de stockage libre (66) est adapté pour l'entreposage d'une marchandise en particulier (62) ou si la marchandise identifiée (62) est adaptée pour l'entreposage à un emplacement de stockage en particulier (66).

11. Procédé selon l'une des revendications 1 à 10, dans lequel l'identification de la zone et le calcul de la dimension sont effectués à la demande d'un opérateur du chariot de manutention (50), notamment dans une zone du nuage de points (64) représentant une zone de l'entrepôt se trouvant actuellement devant le chariot de manutention (50).

12. Chariot de manutention (50) doté d'un système de calcul d'une dimension d'un emplacement de stockage libre (66) ou d'une marchandise à recevoir (62), dans lequel le système présente les éléments suivants :
• une commande électronique (56),
• une caméra (54) disposée sur le chariot de manutention (50), laquelle est reliée à la commande électronique (56) et conçue pour détecter une suite d'images bidimensionnelles,
**caractérisé en ce que** la commande (56) est configurée pour
• calculer un nuage de points tridimensionnel sur la base de la suite d'images bidimensionnelles,
• calculer un facteur de mise à l'échelle pour le nuage de points sur la base d'un premier point du nuage de points et d'un deuxième point du nuage de points, lesquels représentent respectivement une position définie dans l'espace,
• mettre à disposition un nuage de points tridimensionnel mis à l'échelle (64), lequel représente un environnement du chariot de manutention (50) dans un entrepôt,
• identifier une zone dans le nuage de points tridimensionnel mis à l'échelle (64), laquelle représente un emplacement de stockage libre (66) ou une marchandise à recevoir (62), et
• calculer une dimension de l'emplacement de stockage libre (66) ou de la marchandise à recevoir (62) à l'aide du nuage de points tridimensionnel mis à l'échelle (64).
